# EUROPÄISCHE PATENTSCHRIFT

(11) **EP 2 522 959 B1**
(45) Veröffentlichungstag und Bekanntmachung des Hinweises auf die Patenterteilung: **22.11.2017**
(21) Anmeldenummer: 12003721.3
(22) Anmeldetag: 10.05.2012
(51) Int. Cl.: G01D 5/245, G01D 5/36, G01D 5/244

(54) **Elektrisches und/oder optisches Gerät mit wenigstens einer Eingabeeinrichtung**
Electrical and/or optical device with at least one input device
Appareil optique et/ou électrique avec au moins un dispositif de saisie

(30) Priorität: 11.05.2011 DE 102011101235
(43) Veröffentlichungstag der Anmeldung: 14.11.2012
(73) Patentinhaber: Phoenix Contact GmbH & Co. KG, 32825 Blomberg (DE)
(72) Erfinder: Teutenberg, Jürgen, 59602 Rüthen (DE); Rohs, Markus, 32825 Blomberg (DE)
(74) Vertreter: Kampfenkel, Klaus

(56) Entgegenhaltungen:
- DE-A1- 10 200 436
- DE-A1- 19 826 875
- DE-A1-102005 011 406
- DE-C1- 10 235 502
- DE-C2- 19 937 737

## Beschreibung

Die vorliegende Erfindung betrifft ein elektronisches und/oder optisches Gerät mit wenigstens einer Eingabeeinrichtung, insbesondere einem Inkrementalgeber, zum sicheren Eingeben eines Parameters sowie eine Eingabeeinrichtung zum sicheren Eingeben eines Parameters in ein elektronisches und/oder optisches Gerät.

In der Sicherheitstechnik ist es erforderlich, dass bestimmte Konfigurationsparameter sicher an einem elektronischen und/oder optischen Gerät eingestellt werden können, um den geforderten Sicherheitsansprüchen zu genügen. Bekannt ist, dass analoge Potentiometer in der Sicherheitstechnik als Bedienelemente zu diesen Zwecken eingesetzt werden können.

Der vorliegenden Erfindung liegt die Aufgabe zugrunde, ein elektronisches und/oder optisches Gerät mit einem Bedienelement zum sicheren Eingeben eines Parameters zu schaffen, welches eine komfortable, störungsfreie und sichere Eingabe von Parametern ermöglicht.

Ein Kerngedanke der Erfindung ist darin zu sehen, ein elektronisches und/oder optisches Gerät mit einem Signalgeber, auch Encoder genannt, auszurüsten, welcher als Bedienelement für eine sicherheitsgerichtete Anwendung fungieren kann. Sicherheitsgerichtete Einrichtungen weisen grundsätzlich mehrkanalige Strukturen auf, um Fehler sicher erkennen zu können. Die Erfindung macht sich die Tatsache zu nutze, dass ein Encoder zwei in Phase zu einander verschobene Ausgangssignale liefert. Vorzugsweise wird ein Inkrementalgeber mit zwei digitalen Ausgängen verwendet.

Das oben genannte technische Problem wird zum einen durch die Merkmale des Anspruchs 1 gelöst.

Demgemäß wird ein elektronisches und/oder optisches Gerät mit wenigstens einer Eingabeeinrichtung zum sicheren Eingeben eines Parameters bereitgestellt. Die als Bedienelement fungierende Eingabeeinrichtung weist einen Signalgeber mit einem ersten und zweiten Ausgang auf, wobei an jedem Ausgang ein Ausgangssignal bereitgestellt wird. Die beiden Ausgangssignale sind zueinander phasenverschoben. Vorzugsweise sind die beiden Ausgangssignale um 90° zu einander in der Phase verschoben. Weiterhin weist die Eingabeeinrichtung eine erste, mit dem ersten Ausgang verbundene Auswerteeinrichtung und eine zweite, mit dem zweiten Ausgang verbundene Auswerteeinrichtung auf. Die erste und zweite Auswerteeinrichtung sind zum Zählen von Impulsen in Abhängigkeit von dem jeweils empfangenen Ausgangssignal ausgebildet. Weiterhin weist die Eingabeeinrichtung wenigstens eine Vergleichseinrichtung auf, welche zum Vergleichen der Messergebnisse der ersten und zweiten Auswerteeinrichtung ausgebildet ist. Die Anzahl von Impulsen, d. h. die Messergebnisse der ersten und zweiten Auswerteeinrichtung entsprechen einem eingegebenen Parameter.

Dank der erfindungsgemäßen Maßnahme ist das elektronische und/oder optische Gerät für den Einsatz in sicherheitstechnischen Systemen geeignet, da die als Bedienelement dienende Eingabeeinrichtung eine mehrkanalige Struktur aufweist, mit der die Eingabe von Parametern zuverlässig überwacht und geprüft werden kann. Denn nur wenn die Vergleichseinrichtung signalisiert, dass die Messergebnisse der ersten und zweiten Auswerteeinrichtung übereinstimmen, oder innerhalb eines definierten Toleranzbereiches liegen, wird angenommen, dass der Parameter fehlerfrei eingegeben worden ist.

Gemäß einer vorteilhaften Ausgestaltung sind die erste und zweite Auswerteeinrichtung jeweils zum Zählen von Impulsen während eines einstellbaren Zeitintervalls ausgebildet.

Vorzugsweise werden nach jedem Zeitintervall die Zählerstände der beiden Auswerteeinrichtungen auf Null gesetzt, so dass der Messvorgang während eines jeden Zeitintervalls die aktuelle Impulszahl ermittelt.

Alternativ kann in der ersten und zweiten Auswerteeinrichtung eine vorbestimmte Anzahl zu zählender Impulse eingestellt werden. Sobald eine der beiden Auswerteeinrichtungen die vorbestimmte Anzahl von Impulsen erreicht hat, prüft die Vergleichseinrichtung die bis zu diesem Augenblick gezählten Zählimpulse der anderen Auswerteeinrichtung. Stimmen die beiden Messergebnisse überein oder liegen sie in einem vordefinierten Toleranzbereich, gilt der eingegebene Parameter als richtig. Andernfalls kann dem Bedienpersonal signalisiert werden, dass eine fehlerhafte Parametereingabe erfolgt ist.

Um die sichere Überprüfung eines eingegebenen Parameters zu verbessern, weist die Eingabeeinrichtung eine erste, mit dem ersten und zweiten Ausgang des Signalgebers verbundene Richtungs-Erkennungseinrichtung zum Erkennen einer Bewegung des Signalgebers in eine erste Richtung und eine zweite, mit dem ersten und zweiten Ausgang des Signalgebers verbundene Richtungs-Erkennungseinrichtung zum Erkennen einer Bewegung des Signalgebers in eine zweite Richtung auf. Die wenigstens eine Vergleichseinrichtung ist in diesem Fall ferner zum Vergleichen der Messergebnisse der ersten und zweiten Richtungs-Erkennungseinrichtung ausgebildet. Eine fehlerfreie Eingabe eines Parameters wird erkannt, wenn nur eine der beiden Richtungs-Erkennungseinrichtungen eine Bewegungsrichtung erfasst. In den anderen Fällen wird eine fehlerhafte Parametereingabe detektiert.

Eine kompakte Bauweise ergibt sich, wenn die wenigstens eine Vergleichseinrichtung in der ersten oder zweiten Auswerteeinrichtung angeordnet ist. In diesem Fall werden die Messergebnisse der beiden Auswerteeinrichtungen und der beiden Richtungs-Erkennungseinrichtungen zu der Auswerteeinrichtung übertragen, in welcher die Vergleichseinrichtung implementiert ist.

Um die Eingabe von Parametern noch besser überwachen zu können, weist die erste und zweite Auswerteeinrichtung jeweils eine Vergleichseinrichtung auf, wobei die erste und zweite Auswerteeinrichtung dann zum Austauschen von Messergebnissen ausgebildet sind. Ausgetauscht werden in diesem Fall nicht nur die Messergebnisse der jeweiligen Auswerteeinrichtungen, sondern auch die von der zugeordneten Richtungs-Erkennungseinrichtung empfangenen Messergebnisse.

Vorteilhafter Weise ist der Signalgeber ein Inkrementalgeber, der zwei digitale Ausgänge aufweist. In diesem Fall weisen die Ausgangssignale jeweils die Form eines Rechtecksignals auf.

Das oben genannte technische Problem wird ebenfalls mit den Merkmalen des Anspruchs 8 gelöst.

Demgemäß wird eine Eingabeeinrichtung zum sicheren Eingeben eines Parameters in ein elektronisches und/oder optisches Gerät bereitgestellt.

Die Eingabeeinrichtung weist einen Signalgeber mit einem ersten und zweiten Ausgang auf, wobei an jedem Ausgang ein Ausgangssignal bereitgestellt wird. Die Ausgangssignale sind zueinander phasenverschoben. Weiterhin ist eine erste, mit dem ersten Ausgang verbundene Auswerteeinrichtung und eine zweite mit dem zweiten Ausgang verbundene Auswerteeinrichtung vorgesehen. Die erste und zweite Auswerteeinrichtung sind zum Zählen von Impulsen in Abhängigkeit von dem jeweils empfangenen Ausgangssignal ausgebildet. Zudem weist die Eingabeeinrichtung wenigstens eine Vergleichseinrichtung auf, welche zum Vergleichen der Messergebnisse der ersten und zweiten Auswerteeinrichtung ausgebildet ist.

Um Parameter präzise eingeben und die Eingabe sicher überwachen zu können, kann die Eingabeeinrichtung eine erste, mit dem ersten und zweiten Ausgang des Signalgebers verbundene Richtungs-Erkennungseinrichtung zum Erkennen einer Bewegung des Signalgebers in eine erste Richtung und eine zweite, mit dem ersten und zweiten Ausgang des Signalgebers verbundene Richtungs-Erkennungseinrichtung zum Erkennen einer Bewegung des Signalgebers in eine zweite Richtung aufweisen. In diesem Fall ist die wenigstens eine Vergleichseinrichtung zum Vergleichen der Messergebnisse der ersten und zweiten Richtungs-Erkennungseinrichtung ausgebildet.

Die Gewährleistung einer korrekten Eingabe von Parametern kann dadurch erreicht werden, dass die erste und zweite Auswerteeinrichtung jeweils eine Vergleichseinrichtung aufweisen, wobei die erste und zweite Auswerteeinrichtung jeweils zum Austauschen von Messergebnissen ausgebildet sind.

Die Erfindung wird nachfolgend anhand eines Ausführungsbeispiels in Verbindung mit den Zeichnungen näher erläutert. Es zeigen:
- Fig. 1: ein elektronisches und/oder optisches Gerät mit einer Eingabeeinrichtung gemäß der Erfindung, und
- Fig. 2: die beiden Ausgangssignale des in der Fig. 1 gezeigten Encoders.

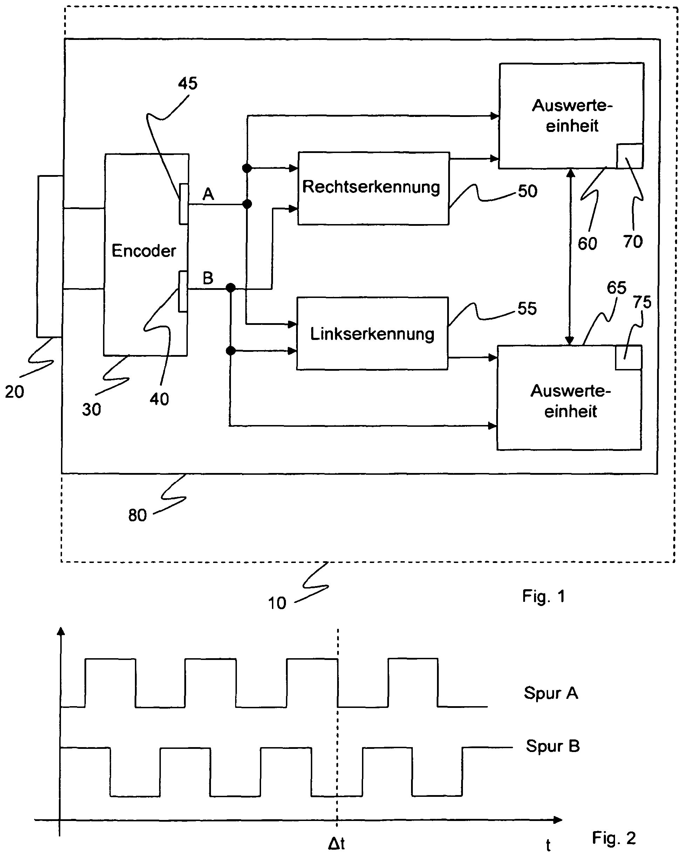

Fig. 1 zeigt ein beispielhaftes elektronisches und/oder optisches Gerät 10, welches z. B. in einer sicherheitsgerichteten Automatisierungsanlage eingesetzt werden kann. Das Gerät 10 verfügt über wenigstens eine Eingabeeinrichtung 80, welche als Bedienelement bezeichnet werden kann. Zu dem Bedienelement 80 kann auch ein abnehmbarer Bedienknopf 20 gezählt werden, der ebenfalls in der Fig. 1 dargestellt ist. Der Bedienknopf ist mit einem Signalgeber 30 verbunden, der im vorliegenden Fall als inkrementaler Drehgeber mit zwei digitalen Ausgängen 40 und 45 ausgebildet ist. Ein solcher Signalgeber wird auch als inkrementaler Encoder oder einfach nur als Encoder bezeichnet. In an sich bekannter Weise kann der Encoder 30 eine nicht dargestellt Maßverkörperung enthalten, die z. B. in regelmäßigen Abständen angeordneten Markierungen aufweist. Die Maßverkörperung kann eine Strichscheibe sein. Der Encoder 30 weist ferner eine nicht dargestellte Abtasteinrichtung auf, die zwei zueinander phasenverschobene Ausgangssignale erzeugen kann. Die beiden Ausgangsignale sind in Fig. 2 dargestellt und werden als Spur A und Spur B bezeichnet. Im dargestellten Beispiel liegt am Ausgang 40 des Encoders 30 das rechteckförmige Ausgangssignal, d. i. die Spur B, an, während am Ausgang 45 das rechteckförmige Ausgangssignal, d. i. die Spur A, anliegt. Die beiden Ausgangssignale sind erforderlich, um auch die Bewegungsrichtung des Bedienknopfes 20 ermitteln zu können.

Der Ausgang 45 ist mit dem Eingang einer Auswerteeinheit 60 verbunden, während der Ausgang 40 des Encoders 30 mit dem Eingang einer Auswerteeineheit 65 verbunden ist. Zudem sind die Ausgänge 40 und 45 mit einem ersten bzw. zweiten Eingang einer Richtungs-Erkennungseinrichtung 50 und einem ersten bzw. zweiten Eingang einer weiteren Richtungs-Erkennungseinrichtung 55 verbunden. Im dargestellten Beispiel ist die Richtungs-Erkennungseinrichtung 50 zum Erkennen einer Rechtsbewegung des Bedienknopfes bzw. des Encoders 30 ausgebildet, während die Richtung-Erkennungseinrichtung 55 zum Erkennen einer Linksbewegung des Encoders 30 ausgebildet ist. Die Funktionsweise der Richtungs-Erkennungseinrichtungen 50 und 55, nämlich aus den beiden Ausgangssignalen des Encoders 30 eine Rechtsbewegung oder Linksbewegung zu ermitteln, ist allgemein bekannt und ohne Belang für die Erfindung. Wichtig ist nur, dass jede Richtungs-Erkennungseinrichtung beide Ausgangssignale, das sind die Spuren A und B des Encoders 30 benötigt, um aus dem Phasenversatz beider Ausgangssignale die Drehrichtung zu ermitteln.

Das Messergebnis der Richtungs-Erkennungseinrichtung 50 wird der Auswerteeinheit 60 zugeführt, während das Messergebnis der Richtungs-Erkennungseinrichtung 55 der Auswerteeinheit 65 zugeführt wird. Im vorliegenden Beispiel weist die Auswerteeinheit 60 eine Vergleichseinrichtung 70 und die Auswerteeinheit 65 eine Vergleichseinrichtung 75 auf. Die beiden Auswerteeinheiten 60 und 65 sind ferner dazu ausgebildet, die eigenen Messergebnisse sowie die von der jeweiligen Richtungs-Erkennungseinrichtung 50 bzw. 55 empfangenen Messergebnisse auszutauschen und die Messergebnisse der Vergleichseinrichtung 70 bzw. 75 zu übergeben.

Alternativ wäre es auch denkbar, dass nur eine der beiden Auswerteeinheiten 60 oder 65 eine Vergleichseinrichtung aufweist. Denkbar wäre ebenfalls, eine außerhalb der Auswerteeinheiten 60 und 65 angeordnete, zentrale Vergleichseinrichtung zu verwenden, der dann sowohl die Messergebnisse der Richtungs-Erkennungseinrichtungen 50 und 55 als auch die Messergebnisse der Auswerteeinheiten 60 und 65 zugeführt werden würde.

Angemerkt sei an dieser Stelle, dass weitere, je nach Implementierung erforderliche elektronische und/oder optische Komponenten des Gerätes 10 nicht dargestellt sind, da sie für die Erfindung ohne Belang sind.

Neben den beiden in Fig. 2 gezeigten rechteckförmigen Ausgangssignalen kann der Encoder 30 beispielsweise auch ein sogenanntes Index-Signal liefern, dass zur Bestimmung der absoluten Position des Encoders 30 in den Auswerteeinheiten 60 und 65 verwendet werden könnte.

Denkbar ist ferner, dass anstelle eines inkrementalen Drehgebers 30 auch ein inkrementaler Schiebegeber zum Einsatz kommen könnte, der anstelle von Drehbewegungen translatorische Bewegungen erfasst. In diesem Fall würden die Richtungs-Erkennungseinrichtungen 50 und 55 keine Drehbewegung im Uhrzeigersinn bzw. gegen den Uhrzeigersinn, sondern eine Bewegungsrichtung nach links bzw. eine Bewegungsrichtung nach rechts erkennen.

Die Auswerteeinheiten 60 und 65 können jeweils derart ausgebildet sein, dass sie in Abhängigkeit des jeweils empfangenen Ausgangssignals, d. h. Spur A bzw. Spur B, während eines einstellbaren Zeitintervalls Δt die in dem jeweiligen Signal enthaltenen Impulse zählen. Anstatt das Messzeitintervall vorzugeben, können in den Auswerteeinheiten 60 und 65 jeweils eine vorbestimmte Anzahl zu ermittelnder Impulse eingestellt werden. In diesem Fall zählen die Auswerteeinheiten 60 und 65 die in den jeweils empfangenen Ausgangssignalen A und B enthaltenen Impulse, wobei der Messvorgang beendet wird, sobald einer der beiden Auswerteeinheiten die eingestellte Anzahl an Zählimpulsen gezählt hat.

Nachfolgend wird die Funktionsweise der in Fig. 1 gezeigten Eingabeeinrichtung 80 näher erläutert.

Angenommen sei, dass am Gerät 10 ein Konfigurationsparameter mit dem Wert 3 sicher eingegeben werden soll. Hierzu wird der Bedienknopf 20 um 3 Schritte nach rechts bewegt. Die resultierenden Ausgangssignale des Encoders 30 erscheinen am Ausgang 45 bzw. am Ausgang 40. Das am Ausgang 45 bereitgestellte Ausgangssignal B wird sowohl der Richtungs-Erkennungseinrichtung 50 und der Richtungs-Erkennungseinrichtung 55 als auch der Auswerteeinheit 60 zugeführt. Das am digitalen Ausgang 40 des Encoders 30 anliegende Ausgangssignal B wird den beiden Richtungs-Erkennungseinrichtungen 50 und 55 sowie der Auswerteeinheit 65 zugeführt. Angenommen sei weiterhin, dass die beiden Auswerteeinheiten 60 und 65 derart ausgebildet sind, dass sie während eines eingestellten Zeitintervalls Δt, welches in der Fig. 2 eingezeichnet ist, Impulse des jeweils empfangenen Ausgangssignals des Encoders 30 zählen. Im vorliegenden Beispiel sei angenommen, dass, wie dies in Fig. 2 dargestellt ist, beide Auswerteeinheiten 60 und 65 jeweils 3 Impulse während des eingestellten Zeitintervalls Δt zählen. Weiterhin sei angenommen, dass die Richtungs-Erkennungseinrichtung 50 eine Rechtsbewegung des Bedienknopfes 20 erkannt hat, während die Richtungs-Erkennungseinrichtung 55 kein Messergebnis oder ein Messergebnis liefert, welches als "keine Linksbewegung" interpretiert werden kann. Das Messergebnis der Richtungs-Erkennungseinrichtung 50 wird der Auswerteeinheit 60 zugeführt, während das Messergebnis der Richtungs-Erkennungseinrichtung 55 der Auswerteeinheit 65 zugeführt wird. Die Auswerteeinheit 60 überträgt die von ihr ermittelte Anzahl von Impulsen sowie das Messergebnis der Richtungs-Erkennungseinrichtung 50 sowohl zur Vergleichseinrichtung 70 als auch zur Auswerteeinheit 65. In ähnlicher Weise überträgt die Auswerteeinheit 65 die von ihr ermittelte Anzahl an gezählten Impulsen sowie das Messergebnis der Richtungs-Erkennungseinrichtung 55 zur internen Vergleichseinrichtung 75 sowie zur Auswerteeinheit 60. Die beiden Auswerteeinheiten 60 und 65 tauschen vorzugsweise kontinuierlich oder zu einstellbaren Zeitpunkten Messergebnisse aus.

Dank dieser Maßnahme kann das Bedienelement 80 eine zweikanalige Plausibilitätsprüfung bei der Eingabe von Parametern durchführen.

Bei der beispielhaft erläuterten Plausibilitätsprüfung ermittelt nunmehr die Vergleichseinrichtung 70 der Auswerteeinheit 60, dass beide Auswerteeinheiten 60 und 65 während des Messintervalls Δt die gleiche Anzahl an Impulsen, nämlich drei Impulse, gezählt haben. Weiterhin erkennt die Vergleichseinrichtung 70, dass nur die Richtungs-Erkennungseinrichtung 50 eine Drehbewegung, und zwar eine Drehbewegung im Uhrzeigersinn erkannt hat. Zu dem gleichen Ergebnis gelangt die Vergleichseinrichtung 75 der Auswerteeinheit 65.

Sind die Auswerteeinheiten 60 und 65 mit einer Anzeigeeinrichtung (nicht dargestellt) verbunden, kann in optischer oder akustischer Weise dem Bedienpersonal signalisiert werden, dass der Parameter am Gerät 10 korrekt eingegeben worden ist.

Stimmen die von den Auswerteeinheiten 60 und 65 gezählten Impulse nicht überein oder liegt die Differenz der gezählten Impulse nicht innerhalb eines vorgegebenen Toleranzbereichs, ist die Parametereingabe fehlerhaft. Eine fehlerhafte Parametereingabe wird von den Auswerteeinheiten 60 und 65 auch erfasst, wenn beide Richtungs-Erkennungseinrichtungen eine Bewegung des Encoders 30 erkannt haben. Eine fehlerhafte Parametereingabe kann sogar erkannt werden, wenn während des Zeitintervalls Δt ein Richtungswechsel erfolgt. Ein solcher Richtungswechsel wird sowohl von der Auswerteeinheit 60 als auch von der Auswerteeinheit 65 erfasst. Denn beide Auswerteeinrichtungen 60 und 65 stellen fest, dass nicht während der gesamten Messzeit das entsprechende Richtungssignal vorlag. Die Auswerteeinheit 60 erkennt beispielsweise eine negative Signalflanke, während die Auswerteeinheit 65 eine positive Signalflanke innerhalb des Zeitintervalls Δt selektiert.

## Patentansprüche

1. Eingabeeinrichtung (80) zum sicheren Eingeben eines Parameters in ein elektronisches und/oder optisches Gerät, umfassend einen Signalgeber (30) mit einem ersten und zweiten Ausgang (40, 45), wobei an jedem Ausgang ein Ausgangssignal bereitgestellt wird und wobei die Ausgangssignale zueinander phasenverschoben sind, eine erste, mit dem ersten Ausgang (45), aber nicht mit dem zweiten Ausgang (40) verbundene Auswerteeinrichtung (60), eine zweite, mit dem zweiten Ausgang (40), aber nicht mit dem ersten Ausgang (45) verbundene Auswerteeinrichtung (65), wobei die erste und zweite Auswerteeinrichtung (60, 65) zum Zählen von Impulsen in Abhängigkeit von dem jeweils empfangenen Ausgangssignal ausgebildet sind, und wenigstens eine Vergleichseinrichtung (70, 75), welche zum Vergleichen der Messergebnisse der ersten und zweiten Auswerteeinrichtung (60, 65) ausgebildet ist.

2. Eingabeeinrichtung nach Anspruch 1 **gekennzeichnet durch** eine erste, mit dem ersten und zweiten Ausgang (40, 45) des Signalgebers (30) verbundene Richtungs-Erkennungseinrichtung (50) zum Erkennen einer Bewegung des Signalgebers in eine erste Richtung und eine zweite, mit dem ersten und zweiten Ausgang (40, 45) des Signalgebers (30) verbundene Richtungs-Erkennungseinrichtung (55) zum Erkennen einer Bewegung des Signalgebers (30) in eine zweite Richtung, wobei die wenigstens eine Vergleichseinrichtung (70, 75) zum Vergleichen der Messergebnisse der ersten und zweiten Richtungs-Erkennungseinrichtung (50, 55) ausgebildet ist.

3. Eingabeeinrichtung nach Anspruch 1 oder 2, **dadurch gekennzeichnet, dass** die erste und zweite Auswerteeinrichtung (60, 65) jeweils eine Vergleichseinrichtung (70, 75) aufweisen und dass die erste und zweite Auswerteeinrichtung (60, 65) jeweils zum Austauschen von Messergebnisse ausgebildet sind.

4. Elektronisches und/oder optisches Gerät (10) mit wenigstens einer Eingabeeinrichtung (20, 80) nach einem der Ansprüche 1 bis 3 zum sicheren Eingeben eines Parameters, wobei die Eingabeeinrichtung aufweist:
einen Signalgeber (30) mit einem ersten und zweiten Ausgang (40; 45), wobei an jedem Ausgang ein Ausgangssignal bereitgestellt wird und wobei die Ausgangssignale zueinander phasenverschoben sind, eine erste, mit dem ersten Ausgang (45), aber nicht mit dem zweiten Ausgang (40) verbundene Auswerteeinrichtung (60),
eine zweite, mit dem zweiten Ausgang (40), aber nicht mit dem ersten Ausgang (45) verbundene Auswerteeinrichtung (65), wobei
die erste und zweite Auswerteeinrichtung (60; 65) zum Zählen von Impulsen in Abhängigkeit von dem jeweils empfangenen Ausgangssignal ausgebildet sind, und wenigstens eine Vergleichseinrichtung (70; 75), welche zum Vergleichen der Messergebnisse der ersten und zweiten Auswerteeinrichtung (60; 65) ausgebildet ist.

5. Elektronisches und/oder optisches Gerät nach Anspruch 4,
**dadurch gekennzeichnet, dass**
die erste und zweite Auswerteeinrichtung (60; 65) jeweils zum Zählen von Impulsen während eines einstellbaren Zeitintervalls ausgebildet sind.

6. Elektronisches und/oder optisches Gerät nach Anspruch 4,
**dadurch gekennzeichnet, dass** die erste und zweite Auswerteeinrichtung (60; 65) zum Zählen einer vorbestimmten Anzahl an Impulsen ausgebildet sind.

7. Elektronisches und/oder optisches Gerät nach einem der Ansprüche 4 bis 6, **dadurch gekennzeichnet, dass** die Eingabeeinrichtung (80) eine erste, mit dem ersten und zweiten Ausgang (40; 45) des Signalgebers (30) verbundene Richtungs-Erkennungseinrichtung (50) zum Erkennen einer Bewegung des Signalgebers (30) in eine erste Richtung und eine zweite, mit dem ersten und zweiten Ausgang (40; 45) des Signalgebers (30) verbundene Richtungs-Erkennungseinrichtung (55) zum Erkennen einer Bewegung des Signalgebers (30) in eine zweite Richtung aufweist, wobei die wenigstens eine Vergleichseinrichtung (70; 75) zum Vergleichen der Messergebnisse der ersten und zweiten Richtungs-Erkennungseinrichtung (50; 55) ausgebildet ist.

8. Elektronisches und/oder optisches Gerät nach einem der Ansprüche 4 bis 7, **dadurch gekennzeichnet, dass** die wenigstens eine Vergleichseinrichtung (70; 75) in der ersten oder zweiten Auswerteeinrichtung (60; 65) angeordnet ist.

9. Elektronisches und/oder optisches Gerät nach einem der Ansprüche 4 bis 8, **dadurch gekennzeichnet, dass** die erste und zweite Auswerteeinrichtung (60; 65) jeweils eine Vergleichseinrichtung (70; 75) aufweisen o und dass die erste und zweite Auswerteeinrichtung (60; 65) jeweils zum Austauschen von Messergebnissen ausgebildet sind.

10. Elektronisches und/oder optisches Gerät nach einem der Ansprüche 4 bis 9, **dadurch gekennzeichnet, dass** der Signalgeber (30) ein Inkrementalgeber ist und dass der erste und zweite Ausgang (40, 45) digitale Ausgänge sind.

## Claims

1. An input device (80) for reliably inputting a parameter into an electronic and/or optical device, comprising
a signal generator (30) having a first and a second output (40, 45), wherein an output signal is provided at each output and wherein the output signals are offset in phase relative to each other;
a first evaluation means (60) connected to the first output (45) but not to the second output (40);
a second evaluation means (65) connected to the second output (40) but not to the first output (45); wherein the first and second evaluation means (60, 65) are configured for counting pulses based on the respective received output signal; and
at least one comparison means (70, 75) configured for comparing the measurement results of the first and second evaluation means (60, 65).

2. The input device according to claim 1, **characterized by** a first direction detecting means (50) connected to the first and second outputs (40, 45) of the signal generator (30) for detecting a movement of the signal generator in a first direction; and
a second direction detecting means (55) connected to the first and second outputs (40, 45) of the signal generator (30) for detecting a movement of the signal generator (30) in a second direction; wherein
the at least one comparison means (70, 75) is configured for comparing the measurement results of said first and second direction detecting means (50, 55).

3. The input device according to claim 1 or 2, **characterized in that** the first and second evaluation means (60, 65) each have comparison means (70, 75); and that the first and second evaluation means (60, 65) are each configured for exchanging measurement results.

4. An electronic and/or optical device (10), comprising at least one input device (20, 80) according to any one of claims 1 to 3 for reliably inputting a parameter, the input device comprising:
a signal generator (30) having a first and a second output (40, 45), wherein an output signal is provided at each output and wherein the output signals are offset in phase relative to each other;
a first evaluation means (60) connected to the first output (45) but not to the second output (40);
a second evaluation means (65) connected to the second output (40) but not to the first output (45); wherein
the first and second evaluation means (60, 65) are configured for counting pulses based on the respective received output signal; and
at least one comparison means (70, 75) configured for comparing the measurement results of the first and second evaluation means (60, 65).

5. The electronic and/or optical device according to claim 4, **characterized in that**
the first and second evaluation means (60, 65) are each configured for counting pulses during an adjustable time interval.

6. The electronic and/or optical device according to claim 4, **characterized in that**
the first and second evaluation means (60, 65) are configured for counting a predetermined number of pulses.

7. The electronic and/or optical device according to any one of claims 4 to 6, **characterized in that** the input device (80) has a first direction detecting means (50) connected to the first and second outputs (40, 45) of the signal generator (30) for detecting a movement of the signal generator (30) in a first direction, and a second direction detecting means (55) connected to the first and second outputs (40, 45) of the signal generator (30) for detecting a movement of the signal generator (30) in a second direction, wherein the at least one comparison means (70, 75) is configured for comparing the measurement results of said first and second direction detecting means (50, 55).

8. The electronic and/or optical device according to any one of claims 4 to 7, **characterized in that** the at least one comparison means (70, 75) is arranged within the first or second evaluation means (60, 65).

9. The electronic and/or optical device according to any one of claims 4 to 8, **characterized in that** the first and second evaluation means (60, 65) each has a comparison means (70, 75); and that the first and second evaluation means (60, 65) are each configured for exchanging measurement results.

10. The electronic and/or optical device according to any one of claims 4 to 9, **characterized in that** the signal generator (30) is an incremental encoder; and that the first and second outputs (40, 45) are digital outputs.

## Revendications

1. Dispositif de saisie (80) pour la saisie sûre d'un paramètre dans un appareil électronique et/ou optique, comprenant un générateur de signaux (30) présentant une première et une deuxième sortie (40, 45), un signal de sortie étant obtenu à chaque sortie et les signaux de sortie étant déphasés les uns par rapport aux autres, un premier dispositif d'évaluation (60) relié à la première sortie (45), mais pas à la deuxième sortie (40), un deuxième dispositif d'évaluation (65) relié à la deuxième sortie (40), mais pas à la première sortie (45), le premier et le deuxième dispositif d'évaluation (60, 65) étant conçus pour compter les impulsions en fonction du signal de sortie respectivement reçu, et au moins un dispositif de comparaison (70, 75), lequel est conçu pour comparer les résultats de la mesure du premier et du deuxième dispositif d'évaluation (60, 65).

2. Dispositif de saisie selon la revendication 1, **caractérisé par** un premier dispositif de détection de direction (50) qui est relié à la première et à la deuxième sortie (40, 45) du générateur de signaux (30) et qui est destiné à détecter un mouvement du générateur de signaux dans une première direction, et un deuxième dispositif de détection de direction (55) qui est relié à la première et à la deuxième sortie (40, 45) du générateur de signaux (30) et qui est destiné à détecter un mouvement du générateur de signaux (30) dans une deuxième direction, le ou les dispositifs de comparaison (70, 75) étant conçus pour comparer les résultats de la mesure du premier et du deuxième dispositif de détection de direction (50, 55).

3. Dispositif de saisie selon la revendication 1 ou 2, **caractérisé en ce que** le premier et le deuxième dispositif d'évaluation (60, 65) comprennent chacun un dispositif de comparaison (70, 75) et **en ce que** le premier et le deuxième dispositif d'évaluation (60, 65) sont conçus chacun pour échanger les résultats de la mesure.

4. Appareil électronique et/ou optique (10) comprenant au moins un dispositif de saisie (20, 80) selon l'une quelconque des revendications 1 à 3 pour la saisie sûre d'un paramètre, le dispositif de saisie comprenant :
un générateur de signaux (30) présentant une première et une deuxième sortie (40, 45), un signal de sortie étant obtenu à chaque sortie et les signaux de sortie étant déphasés les uns par rapport aux autres, un premier dispositif d'évaluation (60) relié à la première sortie (45), mais pas à la deuxième sortie (40),
un deuxième dispositif d'évaluation (65) relié à la deuxième sortie (40), mais pas à la première sortie (45), le premier et le deuxième dispositif d'évaluation (60 ; 65) étant conçus pour compter les impulsions en fonction du signal de sortie respectivement reçu,
et au moins un dispositif de comparaison (70 ; 75), lequel est conçu pour comparer les résultats de la mesure du premier et du deuxième dispositif d'évaluation (60 ; 65).

5. Appareil électronique et/ou optique selon la revendication 4,
**caractérisé en ce que** le premier et le deuxième dispositif d'évaluation (60 ; 65) sont conçus chacun pour compter les impulsions pendant un intervalle de temps réglable.

6. Appareil électronique et/ou optique selon la revendication 4, **caractérisé en ce que** le premier et le deuxième dispositif d'évaluation (60 ; 65) sont conçus pour compter un nombre prédéfini d'impulsions.

7. Appareil électronique et/ou optique selon l'une quelconque des revendications 4 à 6, **caractérisé en ce que** le dispositif de saisie (80) comprend un premier dispositif de détection de direction (50) qui est relié à la première et à la deuxième sortie (40 ; 45) du générateur de signaux (30) et qui est destiné à détecter un mouvement du générateur de signaux (30) dans une première direction, et un deuxième dispositif de détection de direction (55) qui est relié à la première et à la deuxième sortie (40 ; 45) du générateur de signaux (30) et qui est destiné à détecter un mouvement du générateur de signaux (30) dans une deuxième direction, le ou les dispositifs de comparaison (70 ; 75) étant conçus pour comparer les résultats de la mesure du premier et du deuxième dispositif de détection de direction (50 ; 55).

8. Appareil électronique et/ou optique selon l'une quelconque des revendications 4 à 7, **caractérisé en ce que** le ou les dispositifs de comparaison (70 ; 75) sont agencés dans le premier ou le deuxième dispositif d'évaluation (60 ; 65).

9. Appareil électronique et/ou optique selon l'une quelconque des revendications 4 à 8, **caractérisé en ce que** le premier et le deuxième dispositif d'évaluation (60 ; 65) comprennent chacun un dispositif de comparaison (70 ; 75) et **en ce que** le premier et le deuxième dispositif d'évaluation (60 ; 65) sont conçus chacun pour échanger les résultats de la mesure.

10. Appareil électronique et/ou optique selon l'une quelconque des revendications 4 à 9, **caractérisé en ce que** le générateur de signaux (30) est un codeur incrémental et **en ce que** la première et la deuxième sortie (40, 45) sont des sorties numériques.
